(19) Europäisches Patentamt
European Patent Office
Office européen des brevets

(11) EP 2 886 582 A1

(12) **EUROPEAN PATENT APPLICATION**
published in accordance with Art. 153(4) EPC

(43) Date of publication:
**24.06.2015 Bulletin 2015/26**

(21) Application number: **13879562.0**

(22) Date of filing: **12.08.2013**

(51) Int Cl.:
***C08G 69/40*** *(2006.01)*

(86) International application number:
**PCT/JP2013/071835**

(87) International publication number:
**WO 2014/027647 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2012 JP 2012179760**

(71) Applicant: **Mitsubishi Gas Chemical Company, Inc.**
**Tokyo 100-8324 (JP)**

(72) Inventors:
- **TAKEO, Mayumi**
  **Hiratsuka-shi**
  **Kanagawa 254-0016 (JP)**
- **KATOU, Tomonori**
  **Hiratsuka-shi**
  **Kanagawa 254-0016 (JP)**
- **MITADERA, Jun**
  **Hiratsuka-shi**
  **Kanagawa 254-0016 (JP)**
- **SATOU, Kazuya**
  **Hiratsuka-shi**
  **Kanagawa 254-0016 (JP)**
- **TSUNAKA, Nobuhide**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

# (54) MOISTURE-ABSORBING/RELEASING MATERIAL

(57) Provided is a moisture absorbing and releasing material including a polyether polyamide in which a diamine constituent unit thereof is derived from a specified polyether diamine compound (A-1) and a xylylenediamine (A-2), and a dicarboxylic acid constituent unit thereof is derived from an α,ω-linear aliphatic dicarboxylic acid having from 4 to 20 carbon atoms, wherein in the case where when held at 23°C and 80% RH, its coefficient of saturated moisture absorption is defined as 100%, a normalized coefficient of moisture absorption after holding in an environment at 23°C and 80% RH until a coefficient of moisture absorption reaches a saturated state and then further holding in an environment at 23°C and 50% RH for 60 minutes is from 1 to 50%.

*F i g. 1*

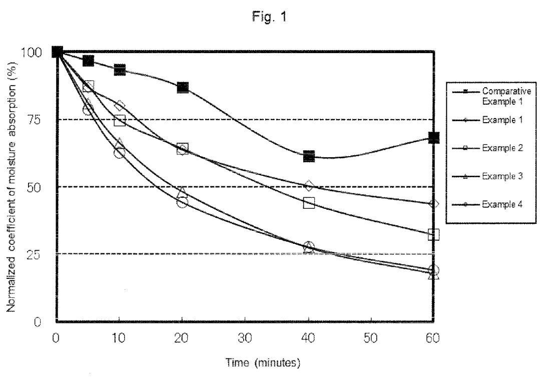


EP 2 886 582 A1

**Description**

TECHNICAL FIELD

The present invention relates to an organic moisture absorbing and releasing material exhibiting moisture-absorbing and moisture-releasing properties following an environment.

BACKGROUND ART

As an organic moisture absorbing agent, polyacrylonitrile derivative-based, polyacrylamide-based, and polyacrylic acid salt-based, water-absorbing polymers, and the like are known (see, for example, Patent Documents 1 and 2).

CITATION LIST

PATENT LITERATURE

Patent Document 1: JP-A-2008-86874

Patent Document 2: JP-A-2004-10768

SUMMARY OF INVENTION

TECHNICAL PROBLEM

However, although the water absorbing polymers have a large water absorbing ability, a rate of releasing water which has been once absorbed is remarkably low.

A technical problem to be solved by the present invention is to provide a moisture absorbing and releasing material that is an organic moisture absorbing and releasing material and which exhibits moisture-absorbing and moisture-releasing properties following an environment and also has high moisture absorption rate and moisture release rate.

SOLUTION TO PROBLEM

The present invention provides a moisture absorbing and releasing material comprising a polyether polyamide in which a diamine constituent unit thereof is derived from a polyether diamine compound (A-1) represented by the following general formula (1) and a xylylenediamine (A-2), and a dicarboxylic acid constituent unit thereof is derived from an $\alpha,\omega$-linear aliphatic dicarboxylic acid having from 4 to 20 carbon atoms, wherein in the case where when held at 23°C and 80% RH, its coefficient of saturated moisture absorption is defined as 100%, a normalized coefficient of moisture absorption after holding in an environment at 23°C and 80% RH until a coefficient of moisture absorption reaches a saturated state and then further holding in an environment at 23°C and 50% RH for 60 minutes is from 1 to 50%:

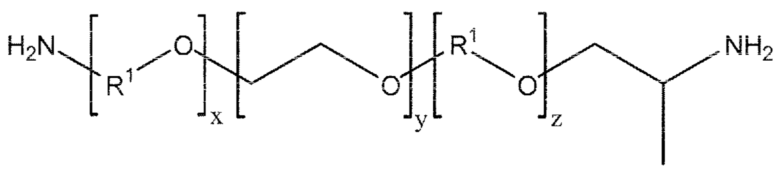

(1)

wherein (x + z) is from 1 to 60; y is from 1 to 50; and $R^1$ represents a propylene group.

ADVANTAGEOUS EFFECTS OF INVENTION

The moisture absorbing and releasing material of the present invention has high moisture absorption rate and moisture release rate. For that reason, in the case of using for interior applications such as a mat, a curtain, a carpet, a wallpaper, etc., the moisture absorbing and releasing material of the present invention is able to achieve humidity control in the interior of a room. In addition, by disposing the moisture absorbing and releasing material of the present invention in the inside of a product such as cosmetics, semiconductor products, machine parts, etc. or in the inside of a package

thereof, the moisture absorbing and releasing material of the present invention is able to prevent deterioration of the product to be caused due to moisture absorption or drying and also to give an appropriate humidity.

BRIEF DESCRIPTION OF DRAWINGS

Fig. 1 is a graph showing a change with time of a normalized coefficient of moisture absorption of each of films in the Examples (Examples 1 to 4 and Comparative Example 1).
Fig. 2 is a graph showing a change with time of a normalized coefficient of moisture absorption of each of films in the Examples (Examples 5 to 8 and Comparative Example 2).

DESCRIPTION OF EMBODIMENTS

The moisture absorbing and releasing material of the present invention includes a polyether polyamide in which a diamine constituent unit thereof is derived from a polyether diamine compound (A-1) represented by the following general formula (1) and a xylylenediamine (A-2), and a dicarboxylic acid constituent unit thereof is derived from an α,ω-linear aliphatic dicarboxylic acid having from 4 to 20 carbon atoms:

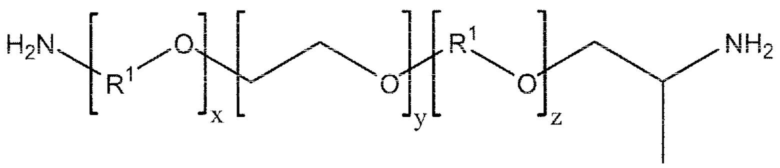

(1)

wherein (x + z) is from 1 to 60; y is from 1 to 50; and $R^1$ represents a propylene group.

<Polyether polyamide>

In the polyether polyamide which is used in the present invention, the diamine constituent unit is derived from a polyether diamine compound (A-1) represented by the following general formula (1) and a xylylenediamine (A-2), and the dicarboxylic acid constituent unit is derived from an α,ω-linear aliphatic dicarboxylic acid having from 4 to 20 carbon atoms.

(Diamine constituent unit)

The diamine constituent unit that constitutes the polyether polyamide is derived from the polyether diamine compound (A-1) represented by the foregoing general formula (1) and the xylylenediamine (A-2).

Polyether diamine compound (A-1)

The diamine constituent unit that constitutes the polyether polyamide includes a constituent unit derived from the polyether diamine compound (A-1) represented by the foregoing general formula (1). A numerical value of (x + z) in the foregoing general formula (1) is from 1 to 60, preferably from 2 to 40, more preferably from 2 to 30, and still more preferably from 2 to 20. In addition, a numerical value of y is from 1 to 50, preferably from 1 to 40, more preferably from 1 to 30, and still more preferably from 1 to 20. In the case where the values of x, y, and z are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.
In addition, in the foregoing general formula (1), all of $R^1$ represent a propylene group. A structure of the oxypropylene group represented by $-OR^1-$ may be any of $-OCH_2CH_2CH_2-$, $-OCH(CH_3)CH_2-$, and $-OCH_2CH(CH_3)-$.
A number average molecular weight of the polyether diamine compound (A-1) is preferably from 180 to 5,700, more preferably from 200 to 4,000, still more preferably from 300 to 3,000, yet still more preferably from 400 to 2,000, and even yet still more preferably from 500 to 1,800. So long as the number average molecular weight of the polyether diamine compound falls within the foregoing range, a polymer that reveals functions as an elastomer, such as flexibility, rubber elasticity, etc., can be obtained.

Xylenediamine (A-2)

The diamine constituent unit that constitutes the polyether polyamide includes a constituent unit derived from the xylylenediamine (A-2). The xylylenediamine (A-2) is preferably m-xylylenediamine, p-xylylenediamine, or a mixture thereof, and more preferably m-xylylenediamine or a mixture of m-xylylenediamine and p-xylylenediamine.

In the case where the xylylenediamine (A-2) is derived from m-xylylenediamine, the resulting polyether polyamide is excellent in terms of flexibility, crystallinity, melt moldability, molding processability, toughness, and barrier properties. The moisture absorbing and releasing material containing the same is excellent in moisture absorbing and releasing properties and also has both rigidity and flexibility, etc. to such an extent that it is able to keep the shape by itself, and therefore, the moisture absorbing and releasing material is suitable as a structural material or a packaging material. Furthermore, the moisture absorbing and releasing material can be preferably used in a site where barrier properties are required.

In the case where the xylylenediamine (A-2) is derived from a mixture of m-xylylenediamine and p-xylylenediamine, the resulting polyether polyamide is excellent in terms of flexibility, crystallinity, melt moldability, molding processability, toughness, and barrier properties, and when the amount of p-xylylenediamine is higher, the resulting polyether polyamide exhibits higher heat resistance and higher elastic modulus. The moisture absorbing and releasing material containing the same is excellent in moisture absorbing and releasing properties and also has both rigidity and flexibility, etc. to such an extent that it is able to keep the shape by itself, and therefore, the moisture absorbing and releasing material is suitable as a structural material or a packaging material.

In the case where a mixture of m-xylylenediamine and p-xylylenediamine is used as the xylylenediamine (A-2), a proportion of the p-xylylenediamine relative to a total amount of m-xylylenediamine and p-xylylenediamine is preferably 90% by mole or less, more preferably from 1 to 80% by mole, and still more preferably from 5 to 70% by mole. So long as the proportion of p-xylylenediamine falls within the foregoing range, a melting point of the resulting polyether polyamide is not close to a decomposition temperature of the polyether polyamide, and hence, such is preferable. In the case where barrier properties are important, it is preferred that the content of m-xylylenediamine is high.

A proportion of the constituent unit derived from the xylylenediamine (A-2) in the diamine constituent unit, namely a proportion of the xylylenediamine (A-2) relative to a total amount of the polyether diamine compound (A-1) and the xylylenediamine (A-2), both of which constitute the diamine constituent unit, is preferably from 50 to 99.8% by mole, more preferably from 50 to 99.5% by mole, and still more preferably from 50 to 99% by mole. So long as the proportion of the constituent unit derived from the xylylenediamine (A-2) in the diamine constituent unit falls within the foregoing range, the resulting polyether polyamide is excellent in terms of melt moldability and furthermore, is excellent in terms of mechanical physical properties such as strength, elastic modulus, etc.

As described previously, though the diamine constituent unit that constitutes the polyether polyamide is derived from the polyether diamine compound (A-1) represented by the foregoing general formula (1) and the xylylenediamine (A-2), so long as the effects of the present invention are not hindered, a constituent unit derived from other diamine compound may be contained.

As the diamine compound which may constitute a diamine constituent unit other than the polyether diamine compound (A-1) and the xylylenediamine (A-2), though there can be exemplified aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, 2,4,4-trimethylhexamethylenediamine, etc.; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like, the diamine compound is not limited to these compounds.

(Dicarboxylic acid constituent unit)

The dicarboxylic acid constituent unit that constitutes the polyether polyamide is derived from an $\alpha,\omega$-linear aliphatic dicarboxylic acid having from 4 to 20 carbon atoms. As the $\alpha,\omega$-linear aliphatic dicarboxylic acid having from 4 to 20 carbon atoms, though there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like, at least one member selected from the group consisting of adipic acid and sebacic acid is preferably used from the viewpoints of crystallinity, high elasticity and barrier properties. These dicarboxylic acids may be used solely or in combination of two or more kinds thereof.

As described previously, though the dicarboxylic acid constituent unit that constitutes the polyether polyamide is derived from the $\alpha,\omega$-linear aliphatic dicarboxylic acid having from 4 to 20 carbon atoms, so long as the effects of the present invention are not hindered, a constituent unit derived from other dicarboxylic acid may be contained.

As the dicarboxylic acid which may constitute the dicarboxylic acid constituent unit other than the α,ω-linear aliphatic dicarboxylic acid having from 4 to 20 carbon atoms, though there can be exemplified aliphatic dicarboxylic acids such as oxalic acid, malonic acid, etc.; aromatic dicarboxylic acids such as terephthalic acid, isophthalic acid, 2,6-naphthalenedicarboxylic acid, etc.; and the like, the dicarboxylic acid is not limited to these compounds.

In the case where a mixture of an α,ω-linear aliphatic dicarboxylic acid having from 4 to 20 carbon atoms and isophthalic acid is used as the dicarboxylic acid component, the molding processability of the polyether polyamide is enhanced, and a glass transition temperature increases, whereby the heat resistance can also be enhanced. A molar ratio of the α,ω-linear aliphatic dicarboxylic acid having from 4 to 20 carbon atoms and isophthalic acid (α,ω-linear aliphatic dicarboxylic acid having from 4 to 20 carbon atoms)/(isophthalic acid)) is preferably from 50/50 to 99/1, and more preferably from 70/30 to 95/5.

<Physical properties of polyether polyamide>

When the polyether polyamide to be used in the present invention contains, as a hard segment, a highly crystalline polyamide block formed of the xylylenediamine (A-2) and the α,ω-linear aliphatic dicarboxylic acid having from 4 to 20 carbon atoms and, as a soft segment, a polyether block derived from the polyether diamine compound (A-1), it has high moisture absorption rate and moisture release rate. It is supposed that it has excellent moisture-absorbing and moisture-releasing properties, since the hydrophilicity of the portion derived from the polyether diamine compound (A-1) and the hydrophobicity of the portion derived from the xylylenediamine (A-2) and the α,ω-linear aliphatic dicarboxylic acid having from 4 to 20 carbon atoms in the polymer are well-balanced.

A relative viscosity of the polyether polyamide is preferably in the range of from 1.1 to 3.0, more preferably in the range of from 1.1 to 2.9, and still more preferably in the range of from 1.1 to 2.8 from the viewpoints of moldability and melt mixing properties with other resins. The relative viscosity is measured by a method described in the Examples.

A melting point of the polyether polyamide is preferably in the range of from 170 to 270°C, more preferably in the range of from 175 to 270°C, still more preferably in the range of from 180 to 270°C, and yet still more preferably in the range of 180 to 260°C from the viewpoint of heat resistance. The melting point is measured by a method described in the Examples.

A rate of tensile elongation at break of the polyether polyamide (measurement temperature: 23°C, humidity: 50% RH) is preferably 100% or more, more preferably 200% or more, still more preferably 250% or more, and yet still more preferably 300% or more from the viewpoint of flexibility.

A tensile elastic modulus of the polyether polyamide (measurement temperature: 23 °C, humidity: 50% RH) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

<Production of polyether polyamide>

The production of the polyether polyamide is not particularly limited but can be performed by an arbitrary method under an arbitrary polymerization condition.

The polyether polyamide can be, for example, produced by a method in which a salt composed of the diamine component (the diamine including the polyether diamine compound (A-1) and the xylylenediamine (A-2), and the like) and the dicarboxylic acid component (the dicarboxylic acid including the α,ω-linear aliphatic dicarboxylic acid having from 4 to 20 carbon atoms and the like) is subjected to temperature rise in a pressurized state in the presence of water, and polymerization is performed in a molten state while removing the added water and condensed water.

In addition, the polyether polyamide can also be produced by a method in which the diamine component (the diamine including the polyether diamine compound (A-1) and the xylylenediamine (A-2), and the like) is added directly to the dicarboxylic acid component (the dicarboxylic acid including the α,ω-linear aliphatic dicarboxylic acid having from 4 to 20 carbon atoms and the like) in a molten state, and polycondensation is performed under atmospheric pressure. In that case, in order to keep the reaction system in a uniform liquid state, the diamine component is continuously added to the dicarboxylic acid component, and during this period, the polycondensation is advanced while subjecting the reaction system to temperature rise such that the reaction temperature does not fall below the melting point of the formed oligoamide or polyamide.

A molar ratio of the diamine component (the diamine including the polyether diamine compound (A-1) and the xylylenediamine (A-2), and the like) and the dicarboxylic acid component (the dicarboxylic acid including the α,ω-linear aliphatic dicarboxylic acid having from 4 to 20 carbon atoms and the like) ((diamine component)/(dicarboxylic acid component)) is preferably in the range of from 0.9 to 1.1, more preferably in the range of from 0.93 to 1.07, still more preferably in the range of from 0.95 to 1.05, and yet still more preferably in the range of from 0.97 to 1.02. When the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing range, the polymerization reaction is rapidly advanced. In addition, since the monomers or the oligomer or polymer, etc. on the way of the polymerization hardly causes thermal decomposition, properties of the resulting polymer become favorable.

A polymerization time is generally from 1 to 5 hours after starting to add dropwise the diamine component. When the polymerization time is allowed to fall within the foregoing range, the molecular weight of the polyether polyamide can be sufficiently increased, and furthermore, coloration of the resulting polymer can be suppressed.

In addition, the polyether polyamide may also be produced by previously charging the polyether diamine compound (A-1) as the diamine component in a reaction tank together with the dicarboxylic acid component and heating them to form a molten mixture [Step (1)]; and adding to the resulting molten mixture the diamine component other than the above-described polyether diamine compound (A-1), including the xylylenediamine (A-2) and the like [Step (2)].

By previously charging the polyether diamine compound (A-1) in a reaction tank, the heat deterioration of the polyether diamine compound (A-1) can be suppressed. In that case, in order to keep the reaction system in a uniform liquid state, the diamine component other than the polyether diamine compound (A-1) is continuously added to the dicarboxylic acid component, and during that period, the polycondensation is advanced while subjecting the reaction system to temperature rise such that the reaction temperature does not fall below the melting point of the formed oligoamide or polyamide.

Here, while the above-described [Step (1)] and [Step (2)] are described below.

[Step (1)]

Step (1) is a step of mixing the polyether diamine compound (A-1) and the $\alpha,\omega$-linear aliphatic dicarboxylic acid and heating them to form a molten mixture.

By going through Step (1), the resulting polyether polyamide is less in odor and coloration, and a resin having a more excellent rate of tensile elongation at break can be formed. It may be presumed that this is caused due to the fact that by going through Step (1), the polyether diamine compound (A-1) and the $\alpha,\omega$-linear aliphatic dicarboxylic acid compound are uniformly melted and mixed, and therefore, in a synthesis process of a polyether polyamide, before the temperature in the reaction vessel reaches a temperature at which the decomposition of the polyether diamine compound (A-1) proceeds, the polyether diamine compound (A-1) is (poly)condensed with the $\alpha,\omega$-linear aliphatic dicarboxylic acid compound and stabilized. That is, it may be considered that by going through Step (1), in the synthesis process of a polyether polyamide, deterioration of the polyether diamine compound (A-1) by thermal history or the like is prevented and efficiently incorporated into the polyether polyamide, and as a result, a decomposition product derived from the polyether diamine compound (A-1) is hardly formed.

It is possible to perform evaluation on what degree of the polyether diamine compound (A-1) is stabilized in the reaction system, by determining an incorporation rate. The incorporation rate is also dependent upon the kind of the $\alpha,\omega$-linear aliphatic dicarboxylic acid compound, and the more increased the carbon number of the straight chain of the $\alpha,\omega$-linear aliphatic dicarboxylic acid compound, the higher the incorporation rate of the polyether diamine compound (A-1) is; however, by going through Step (1), the incorporation rate becomes higher.

The incorporation rate of the above-described polyether diamine compound (A-1) can be determined by the following method.

(1) 0.2 g of the resulting polyether polyamide is dissolved in 2 mL of hexafluoroisopropanol (HFIP).
(2) The solution obtained in (1) is added dropwise to 100 mL of methanol to perform reprecipitation.
(3) A reprecipitate obtained in (2) is filtered with a membrane filter having an opening of 10 $\mu$m.
(4) A residue on the filter as obtained in (3) is dissolved in heavy HFIP (manufactured by Sigma-Aldrich) and analyzed by means of $^1$H-NMR (AV400M, manufactured by Bruker BioSpin K.K.), and a copolymerization rate (a) between the polyether diamine compound (A-1) and the xylylenediamine (A-2) of the residue on the filter is calculated. The copolymerization ratio is calculated from a ratio of a spectral peak area assigned to the xylylenediamine (A-2) and a spectral peak area assigned to the polyether diamine compound (A-1).
(5) The incorporation rate of the polyether diamine compound (A-1) is calculated according to the following equation.

$$\text{Incorporation rate of polyester diamine compound (A-1)} = a/b \times 100\ (\%)$$

a: Copolymerization ratio of the constituent unit derived from the polyether diamine compound (A-1) of the residue on the filter relative to all of the diamine constituent units, as calculated in (4)
b: Copolymerization ratio of the constituent unit derived from the polyether diamine compound (A-1) relative to

all of the diamine constituent units, as calculated from the charge amount at the time of polymerization

First of all, in Step (1), the polyether diamine compound (A-1) and the α,ω-linear aliphatic dicarboxylic acid compound are previously charged in a reaction vessel, and the polyether diamine compound (A-1) in a molten state and the α,ω-linear aliphatic dicarboxylic acid compound in a molten state are mixed. In order to render both the polyether diamine compound (A-1) and the α,ω-linear aliphatic dicarboxylic acid compound in a molten state,

(i) The solid α,ω-linear aliphatic dicarboxylic acid compound and the liquid or solid polyether diamine compound (A-1) may be charged in a reaction vessel and then melted by heating to the melting point of the α,ω-linear aliphatic dicarboxylic acid compound or higher;
(ii) The melted α,ω-linear aliphatic dicarboxylic acid compound may be charged in a reaction vessel having the liquid or solid polyether diamine compound (A-1) charged therein;
(iii) The liquid or solid polyether diamine compound (A-1) may be charged in a reaction vessel having the α,ω-linear aliphatic dicarboxylic acid compound in a molten state charged therein; or
(iv) A mixture prepared by previously mixing the melted polyether diamine compound (A-1) and the melted α,ω-linear aliphatic dicarboxylic acid compound may be charged in a reaction vessel.

In the foregoing (i) to (iv), on the occasion of charging the polyether diamine compound (A-1) and/or the α,ω-linear aliphatic dicarboxylic acid compound in a reaction vessel, the compound or compounds may be dissolved or dispersed in an appropriate solvent. On that occasion, examples of the solvent include water and the like.

In addition, from the viewpoint of producing a polyether polyamide with less coloration, in charging the polyether diamine compound (A-1) and the α,ω-linear aliphatic dicarboxylic acid compound in a reaction vessel, it is preferable to thoroughly purge the inside of the reaction vessel with an inert gas.

In the case of the foregoing (i), it is preferable to purge the inside of the reaction vessel with an inert gas before melting; in the case of the foregoing (ii) or (iii), it is preferable to purge the inside of the reaction vessel with an inert gas before charging the melted α,ω-linear aliphatic dicarboxylic acid compound; and in the case of the foregoing (iv), it is preferable to purge the inside of the reaction vessel with an inert gas before charging the above-described mixture.

Subsequently, in Step (1), the above-described mixture of the polyether diamine compound (A-1) in a molten state and the α,ω-linear aliphatic dicarboxylic acid compound in a molten state is heated.

A heating temperature on the occasion of heating the above-described mixture is preferably the melting point of the α,ω-linear aliphatic dicarboxylic acid compound or higher; more preferably in the range of from the melting point of the α,ω-linear aliphatic dicarboxylic acid compound to (the melting point + 40°C); and still more preferably in the range of from the melting point of the α,ω-linear aliphatic dicarboxylic acid compound to (the melting point + 30°C).

In addition, the heating temperature at the time of finishing Step (1) is preferably from the melting point of the α,ω-linear aliphatic dicarboxylic acid compound to (the melting point + 50°C). When the heating temperature is the melting point of the α,ω-linear aliphatic dicarboxylic acid compound or higher, the mixed state of the polyether diamine compound (A-1) and the α,ω-linear aliphatic dicarboxylic acid compound becomes uniform, so that the effects of the present invention can be sufficiently revealed. In addition, when the heating temperature is not higher than (the melting point of α,ω-linear aliphatic dicarboxylic acid compound + 50°C), there is no concern that the thermal decomposition of the polyether diamine compound (A-1) and the α,ω-linear aliphatic dicarboxylic acid compound proceeds.

Incidentally, the melting point of the α,ω-linear aliphatic dicarboxylic acid compound can be measured by means of differential scanning calorimetry (DSC) or the like.

A heating time in Step (1) is generally from about 15 to 120 minutes. By allowing the heating time to fall within the foregoing range, the mixed state of the polyether diamine compound (A-1) and the α,ω-linear aliphatic dicarboxylic acid compound can be made thoroughly uniform, and there is no concern that the thermal decomposition proceeds.

In Step (1), the molten mixture in which the polyether diamine compound (A-1) in a molten state and the α,ω-linear aliphatic dicarboxylic acid compound in a molten state are uniformly mixed as described above is obtained. In addition, meanwhile, in Step (1), it is preferable that from 30 to 100% by mole of an amino group in the whole of the charged polyether diamine compound (A-1) is (poly)condensed with the α,ω-linear aliphatic dicarboxylic acid compound to form an oligomer or polymer. From this fact, the above-described molten mixture obtained in Step (1) may further contain the above-described melted oligomer or polymer.

In Step (1), a degree of (poly)condensation between the polyether diamine compound (A-1) and the α,ω-linear aliphatic dicarboxylic acid compound as described above varies with a combination of the polyether diamine compound (A-1) and the α,ω-linear aliphatic dicarboxylic acid compound, a mixing ratio thereof, a temperature of the reaction vessel on the occasion of mixing, or a mixing time; however, before Step (2) of adding the diamine component other than the polyether diamine compound (A-1), it is preferable that 30% by mole or more of the amino group of the whole of the charged polyether diamine compound (A-1) is (poly)condensed with the α,ω-linear aliphatic dicarboxylic acid compound, it is more preferable that 50% by mole or more of the amino group of the whole of the charged polyether diamine

compound (A-1) is (poly)condensed with the α,ω-linear aliphatic dicarboxylic acid compound, and it is still more preferable that 70% by mole or more of the amino group of the whole of the charged polyether diamine compound (A-1) is (poly)condensed with the α,ω-linear aliphatic dicarboxylic acid compound.

A rate of reaction of the amino group of the whole of the polyether diamine compound can be calculated according to the following equation. Rate of reaction of amino group = (1 - [$NH_2$ in Step (1)]/[$NH_2$ in (A-1)]) x 100 [$NH_2$ in (A-1)]: Terminal amino group concentration calculated on the occasion of assuming that the whole of the polyether diamine compound (A-1) and the α,ω-linear aliphatic dicarboxylic acid compound as charged are in an unreacted state [$NH_2$ in Step (1)]: Terminal amino group concentration of the mixture in Step (1)

In addition, in Step (1), on the occasion of charging the polyether diamine compound (A-1) and the α,ω-linear aliphatic dicarboxylic acid compound in the reaction vessel, a phosphorus atom-containing compound and an alkali metal compound as described later may be added.

[Step (2)]

The above-described Step (2) is a step of adding a diamine component other than the above-described polyether diamine compound (A-1), including the xylylene diamine (A-2) and the like (hereinafter sometimes abbreviated as "xylylenediamine (A-2), etc.") to the molten mixture obtained in Step (1).

In Step (2), a temperature in the reaction vessel on the occasion of adding the xylylenediamine (A-2), etc. is preferably a temperature of the melting point of the formed polyether amide oligomer or higher and up to (the melting point + 30°C). When the temperature in the reaction vessel on the occasion of adding the xylylenediamine (A-2), etc. is a temperature of the melting point of the polyether amide oligomer composed of the molten mixture of the polyether diamine compound (A-1) and the α,ω-linear aliphatic dicarboxylic acid compound and the xylylenediamine (A-2), etc. or higher and up to (the melting point + 30°C), there is no possibility that the reaction mixture is solidified in the reaction vessel, and there is less possibility that the reaction mixture is deteriorated, and hence, such is preferable.

Though the above-described addition method is not particularly limited, it is preferable to continuously add dropwise the xylylenediamine (A-2), etc. while controlling the temperature in the reaction vessel within the foregoing temperature range, and it is more preferable to continuously raise the temperature in the reaction vessel with an increase of the amount of dropwise addition of the xylylenediamine (A-2), etc.

In addition, it is preferable that at a point of time of completion of addition of the whole amount of the diamine component including the xylylenediamine (A-2), etc., the temperature in the reaction vessel is from the melting point of the produced polyether polyamide to (the melting point + 30°C). When at a point of time of completion of addition of the xylylenediamine (A-2), etc., the temperature in the reaction vessel is a temperature of the melting point of the resulting polyether amide or higher and up to (the melting point + 30°C), there is no possibility that the reaction mixture is solidified in the reaction vessel, and there is less possibility that the reaction mixture is deteriorated, and hence, such is preferable.

Incidentally, the melting point of the polyether amide oligomer or polyether polyamide as referred to herein can be confirmed by means of DSC or the like with respect to a material obtained by previously mixing the polyether diamine compound (A-1), the xylylenediamine (A-2), etc., and the dicarboxylic acid compound in a prescribed molar ratio and melting and mixing them in a nitrogen gas stream for at least about one hour under a heating condition to such an extent that the mixture is melted.

During this period, it is preferable that the inside of the reaction vessel is purged with nitrogen. In addition, during this period, it is preferable that the inside of the reaction vessel is mixed using a stirring blade, thereby rendering the inside of the reaction vessel in a uniform fluidized state.

An addition rate of the xylylenediamine (A-2), etc. is chosen in such a manner that the reaction system is held in a uniform molten state while taking into consideration heat of formation of an amidation reaction, a quantity of heat to be consumed for distillation of condensation formed water, a quantity of heat to be fed into the reaction mixture from a heating medium through a reaction vessel wall, a structure of a portion at which the condensation formed water and the raw material compounds are separated from each other, and the like.

Though a time required for addition of the xylylenediamine (A-2), etc. varies with a scale of the reaction vessel, it is generally in the range of from 0.5 to 5 hours, and more preferably in the range of from 1 to 3 hours. When the time falls within the foregoing range, not only the solidification of the polyether amide oligomer and the polyether polyamide formed in the reaction vessel can be suppressed, but the coloration due to thermal history of the reaction system can be suppressed.

During addition of the xylylenediamine (A-2), etc., condensed water formed with the progress of reaction is distilled out of the reaction system. Incidentally, the raw materials such as the scattered diamine compound and dicarboxylic acid compound, etc. arc separated from condensed water and returned into the reaction vessel; and in this respect, it is possible to control an amount thereof, and the amount can be controlled by, for example, controlling a temperature of a reflux column to an optimum range or controlling a filler of a packing column, such as so-called Raschig ring, Lessing ring, saddle, etc. to appropriate shape and filling amount. For separation of the raw materials from condensed

water, a partial condenser is suitable, and it is preferable to distill off condensed water through a total condenser.

In the above-described Step (2), a pressure in the inside of the reaction vessel is preferably from 0.1 to 0.6 MPa, and more preferably from 0.15 to 0.5 MPa. When the pressure in the inside of the reaction vessel is 0.1 MPa or more, scattering of the unreacted xylylenediamine (A-2), etc. and dicarboxylic acid compound outside the system together with condensed water can be suppressed. For the purpose of preventing scattering of the unreacted xylylenediamine (A-2), etc. and dicarboxylic acid compound outside the system, the scattering can be suppressed by increasing the pressure in the inside of the reaction vessel; however, it can be thoroughly suppressed at a pressure of 0.6 MPa or less. When the pressure in the reaction vessel is more than 0.6 MPa, more energy is required for distilling condensed water outside the reaction system because, for example, there is a concern that the boiling point of the condensed water becomes high, so that it is necessary to allow a high-temperature heating medium to pass by a partial condenser, and hence, such is not preferable.

In the case of applying a pressure, it may be performed by using an inert gas such as nitrogen, etc., or it may be performed by using a steam of condensed water formed during the reaction. In the case where the pressure has been applied, after completion of addition of the xylylenediamine (A-2), etc., the pressure is reduced until it reaches atmospheric pressure.

[Step (3)]

After completion of the above-described Step (2), though the polycondensation reaction may be finished, Step (3) of further continuing the polycondensation reaction may be performed at atmospheric pressure or negative pressure for a fixed period of time.

In the case of further continuing the polycondensation reaction at negative pressure, it is preferable to perform pressure reduction such that the pressure of the reaction system is finally 0.08 MPa or less. Though the time of from completion of addition of the xylylenediamine (A-2), etc. to start of the pressure reduction is not particularly limited, it is preferable to start the pressure reduction within 30 minutes after completion of addition. As for a pressure reduction rate, a rate such that the unreacted xylylenediamine (A-2), etc. is not distilled outside the system together with water during the pressure reduction is chosen, and for example, it is chosen from the range of from 0.1 to 1 MPa/hr. When the pressure reduction rate is made slow, not only a time required for the production increases, but a lot of time is required for the pressure reduction, so that there is a concern that heat deterioration of the resulting polyether polyamide is caused; and hence, such is not preferable.

A temperature of the reaction vessel in Step (3) is preferably a temperature at which the resulting polyether polyamide is not solidified, namely a temperature in the range of from the melting point of the resulting polyether polyamide to (the melting point + 30°C). Incidentally, the melting point of the polyether polyamide as referred to herein can be confirmed by means of DSC or the like.

A polycondensation reaction time in Step (3) is generally 120 minutes or less. When the polymerization time is allowed to fall within the foregoing range, the molecular weight of the polyether polyamide can be sufficiently increased, and furthermore, coloration of the resulting polymer can be suppressed.

After completion of the polycondensation reaction, a method of taking out the polyether polyamide from the reaction vessel is not particularly limited, and a known technique can be adopted; however, from the viewpoints of productivity and sequent handling properties, a technique in which while extracting a strand through a strand die heated at a temperature of from the melting point of the polyether polyamide to (the melting point + 50°C), the strand of the molten resin is cooled in a water tank and then cut by a pelletizer to obtain pellets, or so-called hot cutting or underwater cutting, or the like is preferable. On that occasion, for the purpose of increasing or stabilizing a discharge rate of the polyester polyamide from the strand die, or the like, the inside of the reaction vessel may be pressurized. In the case of pressurization, in order to suppress deterioration of the polyether polyamide, it is preferable to use an inert gas.

It is preferable that the polyether polyamide is produced by a melt polycondensation (melt polymerization) method by addition of a phosphorus atom-containing compound. The melt polycondensation method is preferably a method in which the diamine component is added dropwise to the dicarboxylic acid component having been melted at atmospheric pressure, and the mixture is polymerized in a molten state while removing condensed water.

In the polycondensation system of the polyether polyamide, a phosphorus atom-containing compound can be added within the range where properties thereof are not hindered. Examples of the phosphorus atom-containing compound which can be added include dimethylphosphinic acid, phenylmethylphosphinic acid, hypophosphorous acid, sodium hypophosphite, potassium hypophosphite, lithium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like; and of these, in particular, hypophosphorous acid metal salts such as sodium hypophosphite, potassium

hypophosphite, lithium hypophosphite, etc. are preferably used because they are high in terms of an effect for promoting the amidation reaction and also excellent in terms of a coloration preventing effect, with sodium hypophosphite being especially preferable. The phosphorus atom-containing compound which can be used in the present invention is not limited to these compounds. The addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide from the viewpoints of favorable appearance and molding processability.

In addition, it is preferable to add an alkali metal compound in combination with the phosphorus atom-containing compound in the polycondensation system of the polyether polyamide. In order to prevent the coloration of the polymer during the polycondensation, it is necessary to allow a sufficient amount of the phosphorus atom-containing compound to exist; however, under certain circumstances, there is a concern that gelation of the polymer is caused, and therefore, in order to also adjust an amidation reaction rate, it is preferable to allow an alkali metal compound to coexist. As the alkali metal compound, alkali metal hydroxides and alkali metal acetates are preferable. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like; however, the alkali metal compound can be used without being limited to these compounds. In the case of adding the alkali metal compound in the polycondensation system, a value obtained by dividing the molar number of the compound by the molar number of the phosphorus atom-containing compound is regulated to preferably from 0.5 to 1, more preferably from 0.55 to 0.95, and still more preferably from 0.6 to 0.9. When the subject value falls within the foregoing range, an effect for suppressing the promotion of the amidation reaction of the phosphorus atom-containing compound is appropriate; and therefore, the occurrence of the matter that the polycondensation reaction rate is lowered due to excessive suppression of the reaction, so that thermal history of the polymer increases, thereby causing an increase of gelation of the polymer can be avoided.

A sulfur atom concentration of the polyether polyamide is preferably from 1 to 200 ppm, more preferably from 10 to 150 ppm, and still more preferably from 20 to 100 ppm. When the sulfur atom concentration falls within the foregoing range, not only an increase of yellowness (YI value) of the polyether polyamide at the time of production can be suppressed, but an increase of the YI value on the occasion of melt molding the polyether polyamide can be suppressed, thereby making it possible to suppress the YI value of the resulting molded article at a low level.

Furthermore, in the case of using sebacic acid as the dicarboxylic acid, its sulfur atom concentration is preferably from 1 to 500 ppm, more preferably from 1 to 200 ppm, still more preferably from 10 to 150 ppm, and especially preferably from 20 to 100 ppm. When the sulfur atom concentration falls within the foregoing range, an increase of the YI value on the occasion of polymerizing the polyether polyamide can be suppressed. In addition, an increase of the YI value on the occasion of melt molding the polyether polyamide can be suppressed, thereby making it possible to suppress the YI value of the resulting molded article at a low level.

Similarly, in the case of using sebacic acid as the dicarboxylic acid, its sodium atom concentration is preferably from 1 to 500 ppm, more preferably from 10 to 300 ppm, and still more preferably from 20 to 200 ppm. When the sodium atom concentration falls within the foregoing range, the reactivity on the occasion of synthesizing the polyether polyamide is good, the molecular weight can be easily controlled to an appropriate range, and furthermore, the use amount of the alkali metal compound which is blended for the purpose of adjusting the amidation reaction rate as described above can be made small. In addition, an increase of the viscosity on the occasion of melt molding the polyether polyamide can be suppressed, and not only the moldability becomes favorable, but the generation of scorch at the time of molding processing can be suppressed, and therefore, the quality of the resulting molded article tends to become favorable.

Such sebacic acid is preferably plant-derived sebacic acid. In view of the fact that the plant-derived sebacic acid contains sulfur compounds or sodium compounds as impurities, the polyether polyamide containing, as a constituent unit, a unit derived from plant-derived sebacic acid is low in terms of the YI value even when an antioxidant is not added, and the YI value of the resulting molded article is also low. In addition, it is preferable to use the plant-derived sebacic acid without excessively purifying the impurities. Since it is not necessary to excessively purify the impurities, such is advantageous from the standpoint of costs, too.

In the case of the plant-derived sebacic acid, its purity is preferably from 99 to 100% by mass, more preferably from 99.5 to 100% by mass, and still more preferably from 99.6 to 100% by mass. When the purity of the plant-derived sebacic acid falls within this range, the quality of the resulting polyether polyamide is good, so that the polymerization is not affected, and hence, such is preferable.

For example, an amount of other dicarboxylic acid (e.g., 1,10-decamethylenedicarboxylic acid, etc.) which is contained in the sebacic acid is preferably from 0 to 1 % by mass, more preferably from 0 to 0.7% by mass, and still more preferably from 0 to 0.6% by mass. When the amount of the other dicarboxylic acid falls within this range, the quality of the resulting polyether polyamide is good, so that the polymerization is not affected, and hence, such is preferable.

In addition, an amount of a monocarboxylic acid (e.g., octanoic acid, nonanoic acid, undecanoic acid, etc.)

which is contained in the sebacic acid is preferably from 0 to 1% by mass, more preferably from 0 to 0.5% by mass, and still more preferably from 0 to 0.4% by mass. When the amount of the monocarboxylic acid falls within this range, the quality of the resulting polyether polyamide is good, so that the polymerization is not affected, and hence, such is preferable.

A hue (APHA) of the sebacic acid is preferably 100 or less, more preferably 75 or less, and still more preferably 50 or less. When the hue of the sebacic acid falls within this range, the YI value of the resulting polyether polyamide is low, and hence, such is preferable. Incidentally, the APHA can be measured in conformity with the Standard Methods for the Analysis of Fats, Oils and Related Materials by the Japan Oil Chemists' Society.

The polyether polyamide obtained by the melt polycondensation is once taken out, pelletized, and then dried for use. In addition, for the purpose of further increasing the degree of polymerization, solid phase polymerization may also be performed. As a heating apparatus which is used for drying or solid phase polymerization, a continuous heat drying apparatus, a rotary drum type heating apparatus called, for example, a tumble dryer, a conical dryer, a rotary dryer, etc., or a cone type heating apparatus equipped with a rotary blade in the inside thereof, called a Nauta mixer, can be suitably used. However, the method and the apparatus are not limited to these, and a known method and apparatus may be used. Furthermore, drying can be effected under reduced pressure by means of a vacuum vent of an extruder on pelletization.

The content of the polyether polyamide in the moisture absorbing and releasing material of the present invention is preferably from 20 to 100% by mass, more preferably from 50 to 100% by mass, from 80 to 100% by mass, still more preferably 100% by mass substantially.

<Other components>

The moisture absorbing and releasing material of the present invention can be blended with additives such as a matting agent, an ultraviolet ray absorber, a nucleating agent, a plasticizer, a flame retarder, an antistatic agent, a coloration preventive, a gelation preventive, etc. as the need arises within the range where properties thereof are not hindered.

In addition, the moisture absorbing and releasing material of the present invention can be blended with a thermoplastic resin such as a polyamide resin, a polyester resin, a polyolefin resin, etc. as the need arises within the range where properties thereof are not hindered. Furthermore, the moisture absorbing and releasing material of the present invention can be used in such a form that the polyether polyamide is dispersed in another resin.

In the case where the moisture absorbing and releasing material of the present invention is normalized such that when held at 23°C and 80% RH, its coefficient of saturated moisture absorption is defined as 100%, a normalized coefficient of moisture absorption after holding in an environment at 23°C and 80% RH until a coefficient of moisture absorption reaches a saturated state and then further holding in an environment at 23°C and 50% RH for 60 minutes is from 1 to 50%, preferably from 1 to 45%, and more preferably from 1 to 20%. It is meant that the lower the normalized coefficient of moisture absorption after 60 minutes, the larger the release amount of water and the higher the moisture release rate. When the normalized coefficient of moisture absorption after 60 minutes falls within the foregoing numerical value range, the moisture release rate is high, and hence, such is preferable.

In addition, when the moisture absorbing and releasing material of the present invention is held at 23°C and 80% RH, its coefficient of saturated moisture absorption is preferably 2% or more, more preferably 3% or more, and still more preferably 4% or more. It is meant that the higher the coefficient of saturated moisture absorption, the larger the absorption amount of water and the higher the moisture absorption rate. When the coefficient of saturated moisture absorption is 2% or more, the moisture absorption rate is high, and hence, such is preferable. An upper limit of the coefficient of saturated moisture absorption is not particularly limited, and it is preferable that the coefficient of saturated moisture absorption is higher. However, the upper limit of the coefficient of saturated moisture absorption is, for example, 50% or less, and it is sufficiently 10% or less. Here, the coefficient of saturated moisture absorption is measured by a method described in the Examples.

[Molded article]

The moisture absorbing and releasing material of the present invention can be molded into molded articles of various forms by a conventionally known molding method. As the molding method, for example, molding methods such as injection molding, blow molding, extrusion molding, compression molding, vacuum molding, press molding, direct blow molding, rotational molding, sandwich molding, two-color molding, etc. can be exemplified. The moisture absorbing and releasing material of the present invention is preferably shaped in a film form, a plate-like form, or a granular form and can be used for a mat, a curtain, a carpet, a wallpaper, or the like.

EXAMPLES

The present invention is hereunder described in more detail by reference to the Examples, but it should not be construed that the present invention is limited thereto. Incidentally, in the present Examples, various measurements were performed by the following methods.

1) Relative viscosity ($\eta r$)

0.2 g of a sample was accurately weighed and dissolved in 20 mL of 96% sulfuric acid at from 20 to 30°C with stirring. After completely dissolving, 5 mL of the solution was rapidly taken into a Cannon-Fenske viscometer, allowed to stand in a thermostat at 25°C for 10 minutes, and then measured for a fall time (t). In addition, a fall time (to) of the 96% sulfuric acid itself was similarly measured. A relative viscosity was calculated from t and to according to the following equation.

$$\text{Relative viscosity} = t/t_0$$

2) Number average molecular weight (Mn)

First of all, a sample was dissolved in a phenol/ethanol mixed solvent and a benzyl alcohol solvent, respectively, and a terminal carboxyl group concentration and a terminal amino group concentration were determined by means of neutralization titration in hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH_2] + [COOH])$$

$[NH_2]$: Terminal amino group concentration ($\mu$eq/g)
[COOH]: Terminal carboxyl group concentration ($\mu$eq/g)

3) Differential scanning calorimetry (glass transition temperature, crystallization temperature, and melting point)

The differential scanning calorimetry was performed in conformity with JIS K7121 and K7122. By using a differential scanning calorimeter (a trade name: DSC-60, manufactured by Shimadzu Corporation), each sample was charged in a DSC measurement pan and subjected to a pre-treatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby measuring a glass transition temperature Tg, a crystallization temperature Tch, and a melting point Tm.

4) Moisture absorbing and releasing properties

(Coefficient of moisture absorption and coefficient of saturated moisture absorption)

A measurement sample (moisture absorbing and releasing material) was processed into a film having a thickness of 100 $\mu$m and processed in a shape of 50 mm x 50 mm, and quickly thereafter, a film mass was measured and defined as a mass in an absolute dry state. Subsequently, the resulting sample was stored in an environment at 23°C and 80% RH for 3 days to saturate water, and a coefficient of saturated moisture absorption was determined. Subsequently, the above-described sample was allowed to stand in an environment at 23°C and 50% RH, and a mass of the sample after elapsing a certain period of time (after 5 minutes, after 10 minutes, after 20 minutes, after 40 minutes, and after 60 minutes) was measured, thereby determining a change in the mass. From the results of this measurement, a coefficient of moisture absorption at 23°C and 50% RH was calculated according to the following equation.

$$\text{Coefficient of moisture absorption (\%)} = [\{(\text{Mass after elapsing a prescribed period of time at 23°C and 50\% RH}) - (\text{Mass at the time of absolute drying})\}/(\text{Mass at the time of absolute drying})] \times 100$$

(Normalized coefficient of moisture absorption)

Furthermore, when allowed to stand for a prescribed period of time under a condition at 23°C and 50% RH, a value of a coefficient of water absorption was normalized according to the following equation while defining a coefficient of saturated moisture absorption at 23°C and 80% RH (namely, a coefficient of moisture absorption at an elapsing time of 0 minute) as 100%.

Normalized coefficient of moisture absorption (%) = [(Coefficient of water absorption after elapsing a prescribed period of time at 23°C and 50% RH)/(Coefficient of water absorption at an elapsing time of 0 minute)] x 100

Example 1

In a reaction vessel having a capacity of about 3 L and equipped with a stirrer, a nitrogen gas inlet, and a condensed water discharge port, 809.00 g of sebacic acid, 0.6367 g of sodium hypophosphite monohydrate, and 0.4435 g of sodium acetate were charged, and after thoroughly purging the inside of the vessel with nitrogen, the mixture was melted at 170°C while feeding a nitrogen gas at a rate of 20 mL/min. A mixed liquid of 539.35 g of m-xylylenediamine (MXDA) (manufactured by Mitsubishi Gas Chemical Company, Inc.) and 36.00 g of a polyether diamine (a trade name: ED-900, manufactured by Huntsman Corporation, USA; according to the catalog of Huntsman Corporation, USA, this compound is represented by the following general formula (1), wherein an approximate figure of (x + z) is 6.0, and an approximate figure of y is 12.5, and has a number average molecular weight of 900) was added dropwise thereto while gradually raising the temperature to 260°C, and the mixture was polymerized for about 2 hours to obtain a polyether polyamide. $\eta r$ = 1.81, [COOH] = 83.89 $\mu$eq/g, [$NH_2$] = 40.93 $\mu$eq/g, Mn = 16,024, Tg = 54.0°C, Tch = 103.0°C, Tm = 190.7°C

The resulting polyether polyamide was subjected to extrusion molding at a temperature of 250°C, thereby fabricating a non-stretched film having a thickness of about 100 $\mu$m.

The above-described moisture absorbing and releasing properties were measured by using the resulting film. Results are shown in Tables 1 and 2.

Examples 2 to 4

Films were obtained in the same manner as that in Example 1, except that the addition amount of the polyether diamine in Example 1 was respectively changed as shown in Table 1, followed by measuring the above-described moisture absorbing and releasing properties. Results are shown in Tables 1 and 2.

Comparative Example 1

In a reaction vessel having a capacity of about 3 L and equipped with a stirrer, a nitrogen gas inlet, and a condensed water discharge port, 809.00 g of sebacic acid, 0.6210 g of sodium hypophosphite monohydrate, and 0.4325 g of sodium acetate were charged, and after thoroughly purging the inside of the vessel with nitrogen, the mixture was melted at 170°C while feeding a nitrogen gas at a rate of 20 mL/min. 544.80 g of m-xylylenediamine (MXDA) (manufactured by Mitsubishi Gas Chemical Company, Inc.) was added dropwise thereto while gradually raising the temperature to 260°C, and the mixture was polymerized for about 2 hours to obtain a polyamide. $\eta r$ = 1.80, [COOH] = 88.5 $\mu$eq/g, [$NH_2$] = 26.7 $\mu$eq/g, Mn = 17,300, Tg = 61.2°C, Tch = 114.1°C, Tm = 191.5°C

The resulting polyamide was subjected to extrusion molding at a temperature of 220°C, thereby fabricating a non-stretched film having a thickness of about 100 $\mu$m.

The above-described moisture absorbing and releasing properties were measured by using the resulting film. Results are shown in Tables 1 and 2.

Example 5

In a reaction vessel having a capacity of about 3 L and equipped with a stirrer, a nitrogen gas inlet, and a condensed water discharge port, 829.23 g of sebacic acid, 0.6526 g of sodium hypophosphite monohydrate, and 0.4546 g of sodium acetate were charged, and after thoroughly purging the inside of the vessel with nitrogen, the mixture was melted at 170°C while feeding a nitrogen gas at a rate of 20 mL/min. A mixed liquid of 386.99 g of m-xylylenediamine

(MXDA) (manufactured by Mitsubishi Gas Chemical Company, Inc.) and 165.85 g of p-xylylenediamine (PXDA) (manufactured by Mitsubishi Gas Chemical Company, Inc.) (molar ratio (MXDA/PXDA = 70/30)) and 36.90 g of a polyether diamine (a trade name: ED-900, manufactured by Huntsman Corporation, USA) was added dropwise thereto while gradually raising the temperature to 260°C, and the mixture was polymerized for about 2 hours to obtain a polyether polyamide. ηr = 1.81, [COOH] = 53.34 μeq/g, $[NH_2]$ = 82.12 μeq/g, Mn = 14,765, Tg = 58.0°C, Tch = 96.8°C, Tm = 211.3°C

The resulting polyether polyamide was subjected to extrusion molding at a temperature of 270°C, thereby fabricating a non-stretched film having a thickness of about 100 μm.

The above-described moisture absorbing and releasing properties were measured by using the resulting film. Results are shown in Tables 1 and 2.

Examples 6 to 8

Films were obtained in the same manner as that in Example 5, except that the addition amount of the polyether diamine in Example 5 was respectively changed as shown in Table 1, followed by measuring the above-described moisture absorbing and releasing properties. Results are shown in Tables 1 and 2.

Comparative Example 2

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the mixture was melted at 170°C while feeding a nitrogen gas at a rate of 20 mL/min. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature to 260°C, and the mixture was polymerized for about 2 hours to obtain a polyamide. ηr = 2.20, [COOH] = 81.8 μeq/g, $[NH_2]$ = 26.9 μeq/g, Mn = 18,400, Tg = 65.9°C, Tch = 100.1°C, Tm = 213.8°C

The resulting polyamide was subjected to extrusion molding at a temperature of 240°C, thereby fabricating a film having a thickness of about 100 μm.

The above-described moisture absorbing and releasing properties were measured by using the resulting film. Results are shown in Tables 1 and 2.

Table 1

| | Moisture absorbing and releasing material | | | Coefficient of moisture absorption of the film when allowed to stand under a condition at 23°C and 50% RH (%) | | | | | |
|---|---|---|---|---|---|---|---|---|---|
| | Diamine | Molar ratio of added ED (% by mole) | Dicarboxylic acid | After 0 minute | After 5 minutes | After 10 minutes | After 20 minutes | After 40 minutes | After 60 minutes |
| Example 1 | MXDA/ED | 1 | Sebacic acid | 1.20 | 1.04 | 0.96 | 0.77 | 0.61 | 0.52 |
| Example 2 | MXDA/ED | 5 | Sebacic acid | 2.28 | 1.99 | 1.70 | 1.46 | 1.00 | 0.74 |
| Example 3 | MXDA/ED | 10 | Sebacic acid | 3.50 | 2.83 | 2.31 | 1.68 | 0.96 | 0.62 |
| Example 4 | MXDA/ED | 15 | Sebacic acid | 4.67 | 3.66 | 2.92 | 2.06 | 1.30 | 0.89 |
| Comparative Example 1 | MXDA | 0 | Sebacic acid | 1.51 | 1.46 | 1.41 | 1.31 | 0.93 | 1.03 |
| Example 5 | MXDA/PXDA/ED | 1 | Sebacic acid | 1.38 | 1.34 | 1.09 | 0.97 | 0.80 | 0.59 |
| Example 6 | MXDA/PXDA/ED | 5 | Sebacic acid | 2.56 | 2.18 | 2.06 | 1.79 | 1.46 | 1.16 |
| Example 7 | MXDA/PXDA/ED | 10 | Sebacic acid | 3.07 | 1.96 | 1.44 | 1.07 | 0.66 | 0.44 |
| Example 8 | MXDA/PXDA/ED | 15 | Sebacic acid | 4.30 | 2.43 | 1.61 | 0.93 | 0.45 | 0.15 |
| Comparative Example 2 | MXDA/PXDA | 0 | Sebacic acid | 1.60 | 1.38 | 1.22 | 1.22 | 1.02 | 0.92 |

MXDA: m-Xylylenediamine
MXDA/PXDA: m-Xylylenediamine/p-xylylenediamine (molar ratio: 70/30)
ED: ED-900 (a trade name for polyether diamine, manufactured by Huntsman Corporation)
The coefficient of moisture absorption after elapsing 0 minute exhibits a coefficient of saturated moisture absorption under a condition at 23°C and 80% RH.

Table 2

| | Moisture absorbing and releasing material | | | Normalized coefficient of moisture absorption of the film when allowed to stand under a condition at 23°C and 50% RH (%) | | | | | |
|---|---|---|---|---|---|---|---|---|---|
| | Diamine | Molar ratio of added ED (% by mole) | Dicarboxylic acid | After 0 minute | After 5 minutes | After 10 minutes | After 20 minutes | After 40 minutes | After 60 minutes |
| Example 1 | MXDA/ED | 1 | Sebacic acid | 100 | 87 | 80 | 64 | 50 | 44 |
| Example 2 | MXDA/ED | 5 | Sebacic acid | 100 | 87 | 75 | 64 | 44 | 32 |
| Example 3 | MXDA/ED | 10 | Sebacic acid | 100 | 81 | 66 | 48 | 27 | 18 |
| Example 4 | MXDA/ED | 15 | Sebacic acid | 100 | 78 | 63 | 44 | 28 | 19 |
| Comparative Example 1 | MXDA | 0 | Sebacic acid | 100 | 97 | 93 | 87 | 61 | 68 |
| Example 5 | MXDA/PXDA/ED | 1 | Sebacic acid | 100 | 97 | 79 | 70 | 58 | 43 |
| Example 6 | MXDA/PXDA/ED | 5 | Sebacic acid | 100 | 85 | 81 | 70 | 57 | 45 |
| Example 7 | MXDA/PXDA/ED | 10 | Sebacic acid | 100 | 64 | 47 | 35 | 22 | 14 |
| Example 8 | MXDA/PXDA/ED | 15 | Sebacic acid | 100 | 56 | 38 | 22 | 11 | 4 |
| Comparative Example 2 | MXDA/PXDA | 0 | Sebacic acid | 100 | 86 | 76 | 76 | 64 | 58 |

MXDA: m-Xylylenediamine
MXDA/PXDA: m-Xylylenediamine/p-xylylenediamine (molar ratio: 70/30)
ED: ED-900 (a trade name for polyether diamine, manufactured by Huntsman Corporation)

In addition, the results of Table 2 are plotted in the drawings. Each of Figs. 1 and 2 is a graph showing a change with time of the normalized coefficient of moisture absorption of the film in each of the Examples. Fig. 1 is concerned with Examples 1 to 4 and Comparative Example 1, and Fig. 2 is concerned with Examples 5 to 8 and Comparative Example 2.

From the results of Tables 1 to 2 and Figs. 1 to 2, it is noted that the moisture absorbing and releasing material of the present invention exhibits moisture-absorbing and moisture-releasing properties following the environment and also has high moisture absorption rate and moisture release rate. Specifically, in the moisture absorbing and releasing materials of Examples 1 to 8, the normalized coefficient of moisture absorption after holding in an environment at 23°C and 50% RH for 60 minutes is 50% or less, and the moisture release rate is high. In particular, in the moisture absorbing and releasing materials of Examples 3, 4, 7 and 8 in which the addition amount of the polyether diamine compound (A-1) is 10% by mole or 15% by mole, the normalized coefficient of moisture absorption is 20% or less, and the moisture release rate is very high. In addition, from the results of Table 1, it is noted that in the moisture absorbing and releasing materials of Examples 2 to 4 and 6 to 8, when held at 23°C and 80% RH, the coefficient of saturated moisture absorption (namely, the coefficient of moisture absorption at an elapsing time of 0 minute) is 2% or more, and the moisture absorption rate is also high.

INDUSTRIAL APPLICABILITY

The moisture absorbing and releasing material of the present invention is high in the water absorption rate and water release rate and can be suitably applied for interior applications such as a mat, a curtain, a carpet, a wallpaper, etc.

## Claims

1. A moisture absorbing and releasing material comprising a polyether polyamide in which a diamine constituent unit thereof is derived from a polyether diamine compound (A-1) represented by the following general formula (1) and a xylylenediamine (A-2), and a dicarboxylic acid constituent unit thereof is derived from an α,ω-linear aliphatic dicarboxylic acid having from 4 to 20 carbon atoms, wherein in the case where when held at 23°C and 80% RH, its coefficient of saturated moisture absorption is defined as 100%, a normalized coefficient of moisture absorption after holding in an environment at 23°C and 80% RH until a coefficient of moisture absorption reaches a saturated state and then further holding in an environment at 23°C and 50% RH for 60 minutes is from 1 to 50%:

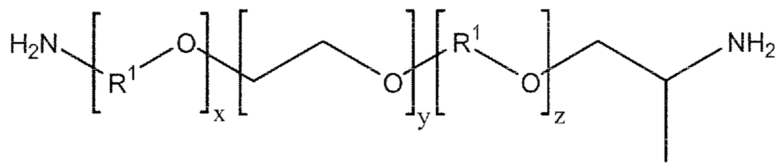

(1)

wherein (x + z) is from 1 to 60; y is from 1 to 50; and $R^1$ represents a propylene group.

2. The moisture absorbing and releasing material according to claim 1, wherein the α,ω-linear aliphatic dicarboxylic acid having from 4 to 20 carbon atoms is at least one member selected from the group consisting of adipic acid and sebacic acid.

3. The moisture absorbing and releasing material according to claim 1 or 2, wherein the xylylenediamine (A-2) is m-xylylenediamine, p-xylylenediamine, or a mixture thereof.

4. The moisture absorbing and releasing material according to any one of claims 1 to 3, wherein the xylylenediamine (A-2) is m-xylyienediamine.

5. The moisture absorbing and releasing material according to any one of claims 1 to 3, wherein the xylylenediamine (A-2) is a mixture of m-xylylenediamine and p-xylylenediamine.

6. The moisture absorbing and releasing material according to claim 5, wherein a proportion of p-xylylenediamine relative to a total amount of m-xylylenediamine and p-xylylenediamine is 90% by mole or less.

7. The moisture absorbing and releasing material according to any one of claims 1 to 6, wherein a proportion of the

constituent unit derived from the xylylenediamine (A-2) in the diamine constituent unit is from 50 to 99.8% by mole.

**8.** The moisture absorbing and releasing material according to any one of claims 1 to 7, which is a film.

**9.** The moisture absorbing and releasing material according to any one of claims 1 to 8, wherein when held at 23°C and 80% RH, its coefficient of saturated moisture absorption is 2% or more.

Fig. 1

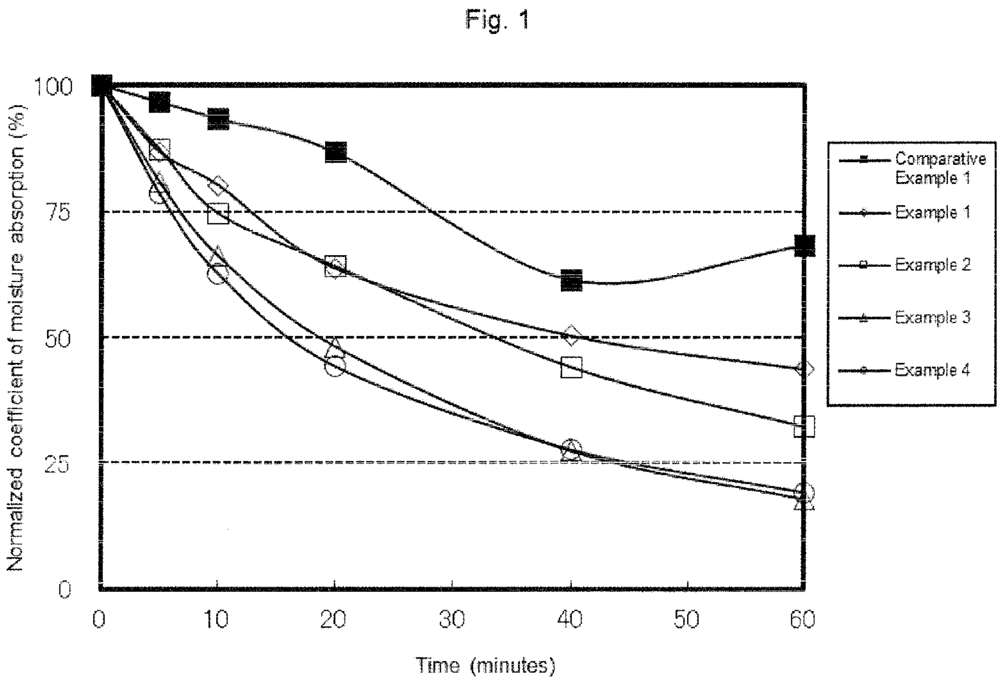
Fig. 1
100
75
50
25
0
Normalized coefficient of moisture absorption (%)
0
10
20
30
40
50
60
Time (minutes)
Comparative Example 1
Example 1
Example 2
Example 3
Example 4

*Fig. 2*

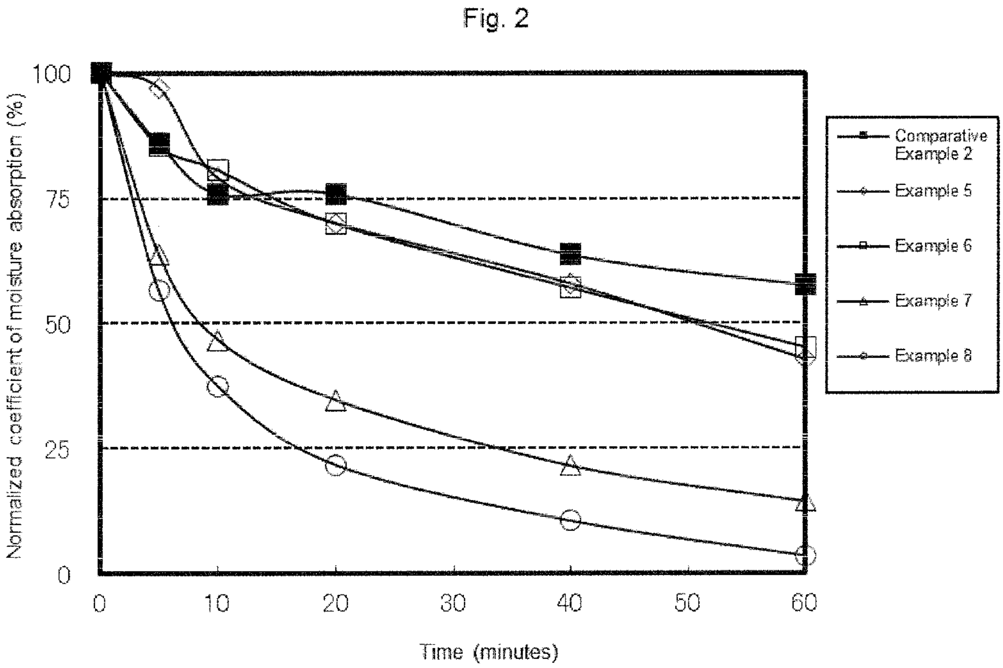
Fig. 2
Normalized coefficient of moisture absorption (%)
100
75
50
25
0
0
10
20
30
40
50
60
Time (minutes)
Comparative Example 2
Example 5
Example 6
Example 7
Example 8

**INTERNATIONAL SEARCH REPORT**

International application No.
PCT/JP2013/071835

A. CLASSIFICATION OF SUBJECT MATTER
*C08G69/40*(2006.01)i

According to International Patent Classification (IPC) or to both national classification and IPC

B. FIELDS SEARCHED

Minimum documentation searched (classification system followed by classification symbols)
C08G69/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 3-237131 A (Mitsubishi Kasei Corp.), 23 October 1991 (23.10.1991), claims; page 3, upper left column, lines 9 to 12; page 3, lower right column, line 9 to page 4, upper left column, line 16; page 4, upper right column, line 13 to lower left column, line 7; page 4, lower left column, line 13 to lower right column, line 10; page 6, upper left column, lines 14 to 17; examples (Family: none) | 1,2,7-9<br>3-6 |
| Y<br>A | JP 49-110744 A (Toyobo Co., Ltd.), 22 October 1974 (22.10.1974), claims; page 4, upper left column, lines 10 to 15; examples & GB 1449315 A & DE 2405646 A1 & FR 2216316 A & IT 1009133 B | 3-6<br>1,2,7-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2013 (01.11.13) | 12 November, 2013 (12.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/071835

C (Continuation). DOCUMENTS CONSIDERED TO BE RELEVANT

| Category* | Citation of document, with indication, where appropriate, of the relevant passages | Relevant to claim No. |
|---|---|---|
| A | US 4218351 A (Minnesota Mining and Manufacturing Co.), 19 August 1980 (19.08.1980), entire text (Family: none) | 1-9 |
| A | JP 1-193320 A (General Electric Co.), 03 August 1989 (03.08.1989), entire text & EP 313861 A1 | 1-9 |
| A | JP 6-335522 A (Terumo Corp.), 06 December 1994 (06.12.1994), entire text & EP 600793 A1 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008086874 A
- JP 2004010768 A